Europäisches Patentamt

European Patent Office

Office européen des brevets

Publication number: **0 367 175**
**A2**

# EUROPEAN PATENT APPLICATION

Application number: **89120095.8**

Int. Cl.5 **G06F 15/62**

Date of filing: **30.10.89**

Priority: **31.10.88 JP 275612/88**

Date of publication of application:
**09.05.90 Bulletin 90/19**

Designated Contracting States:
**DE FR GB**

Applicant: **Kabushiki Kaisha Toshiba**
**72, Horikawa-cho Saiwai-ku**
**Kawasaki-shi(JP)**

Inventor: **Yukawa, Atsushi c/o Intellectual**
**Property Division**
**Kabushiki Kaisha Toshiba 1-1 Shibaura**
**1-chome**
**Minato-ku Tokyo 105(JP)**

Representative: **Lehn, Werner, Dipl.-Ing. et al**
**Hoffmann, Eitle & Partner Patentanwälte**
**Arabellastrasse 4**
**D-8000 München 81(DE)**

Method and system for halfreducing binary image.

Odd or even line data of a binary image stored in an image memory (11) is sequentially read out by an interlace control circuit (14) in units of a predetermined number of pixels. The read out data is converted by a data conversion circuit (15) into data having pixels of 1/2 of the read out data by retrieving a conversion table (16). The conversion table (16) stores conversion data obtained by half-reducing the data read out from the image memory (11) in advance. With this operation, a half-reduced binary image can be obtained.

F I G. 2

## Method and system for half-reducing binary image

The present invention relates to a method and system for half-reducing a binary image.

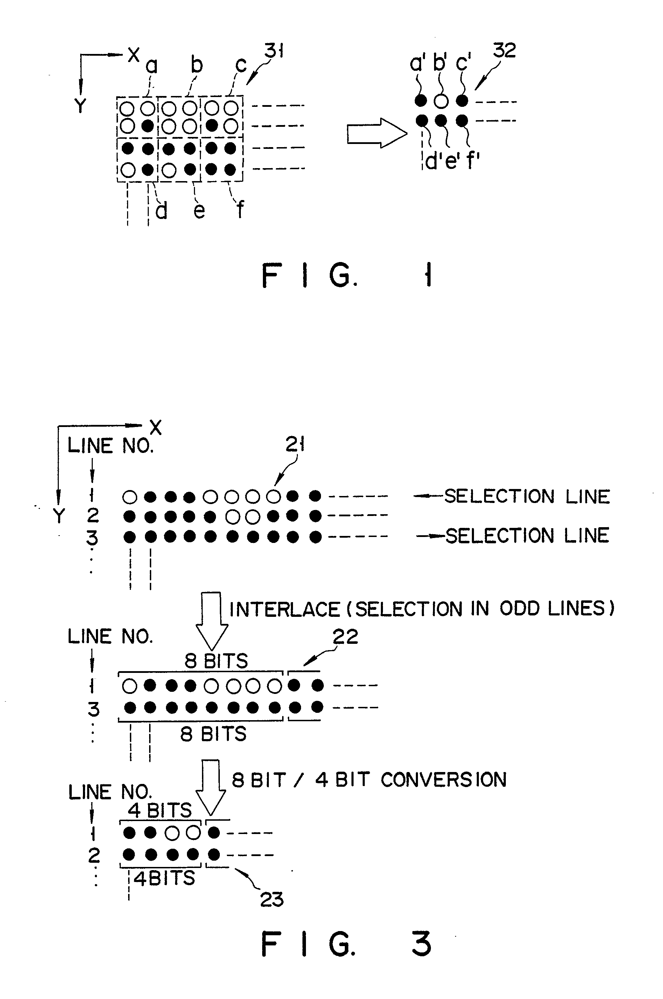

In a conventional method, when a binary image 31 (see Fig. 1) stored in an image memory is to be half-reduced in the y-axis direction (line direction) and the x-axis direction (a direction perpendicular to the line direction, i.e., the raster scan direction), the binary image 31 is divided into 2 × 2-pixel matrices a, b, c, ... and binary image data of one pixel is read out from each matrix. More specifically, binary image data of four pixels is read out by four memory access operations to the image memory. Every binary image data of four pixels is then subjected to, e.g., a logic operation (OR). With this operation, the matrices a, b, c, ... are half-reduced in the x- and y-axis directions and converted into binary image data a', b', c', ....

The above-described processing is sequentially performed with respect to all the 2 × 2-pixel matrices constituting the binary image 31 to be half-reduced. As a result, a reduced binary image 32 is obtained. If the binary image 31 includes 4.096 × 4.096 pixels, it takes about 24 seconds to obtain the binary image 32.

As described above, in the conventional method, when a binary image is to be half-reduced, a memory address of an image memory must be determined in an unit of one pixel so as to read out all the pixels.

Accordingly, this processing takes an undesirably long period of time.

Therefore, a system has demanded for reducing a time required for a half-reducing process of a binary image in the line direction and a direction perpendicular thereto.

It is an object of the present invention to provide a method and system for half-reducing a binary image.

According to one aspect of the present invention, there is provided a method for reducing a binary image having a plurality of lines, the method comprising the steps of:
storing the binary image;
reading out binary data having a predetermined size from the binary image every predetermined line;
storing conversion data for reducing the binary data; and
converting the read out binary data in accordance with the stored conversion data, thereby obtaining a reduced binary image.

According to another aspect of the present invention, there is provided a system for reducing a binary image having a plurality of lines, the system comprising:

storing means for storing the binary image;
reading out means for reading out binary data having a predetermined size from the binary image every predetermined line;
storing means for storing conversion data for reducing the binary data; and
converting means for converting the read out binary data in accordance with the stored conversion data, thereby obtaining a reduced binary image.

This invention can be more fully understood from the following detailed description when taken in conjunction with the accompanying drawings, in which:

Fig. 1 is a view for explaining a conventional half-reducing process of a binary image;

Fig. 2 is a block diagram of a system according to an embodiment of the present invention;

Fig. 3 is a view for explaining a half-reducing process of a binary image according to the present invention; and

Fig. 4 is a flow chart for explaining an operation of a data conversion circuit.

An embodiment of the present invention will be described below with reference to the accompanying drawings.

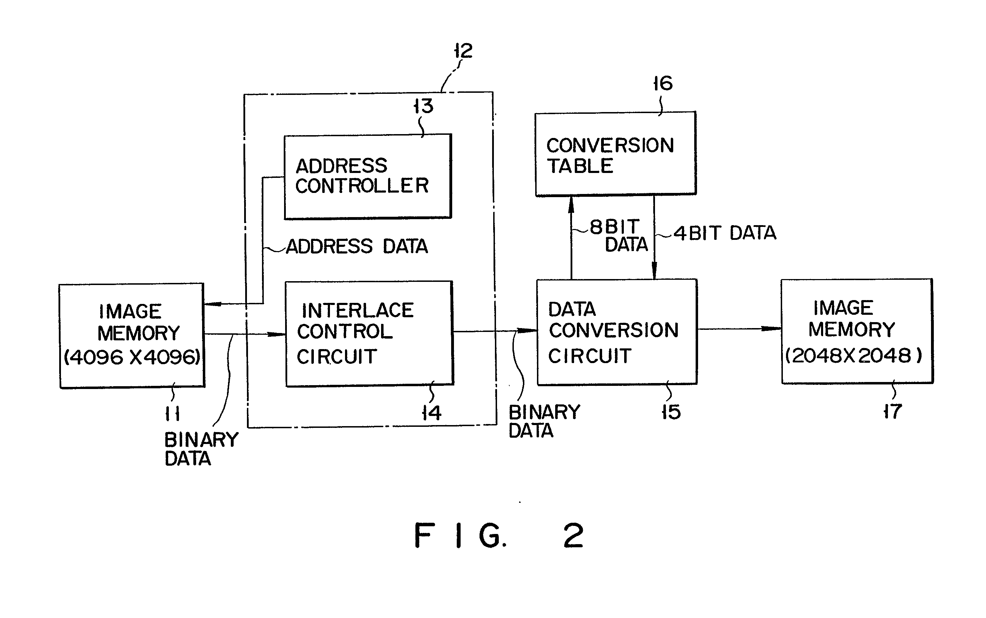

In a binary image reducing system shown in Fig. 2, an image memory 11 stores a binary image (having a size of 4,096 × 4.096 pixels (2 M bytes)) to be half-reduced. Note that the image memory 11 can be accessed in the x-axis direction (raster scan direction) in units of bytes (8-bits).

A data read section 12 sequentially reads out odd line data of the binary image stored in the image memory 11 in units of bytes from the first line. The section 12 includes an address controller 13 and an interlace control circuit 14. The address controller 13 generates raster addresses for accessing the image memory 11 in the x-axis direction in units of bytes. The interlace control circuit 14 selects image data read out from the image memory 11 in units of bytes in accordance with the raster addresses. In this case, only odd line data are selected in units of bytes.

A data conversion circuit 15 converts byte data read out by the interlace control circuit 14 into 4-bit conversion data.

A conversion table 16 used for data conversion has $2^8$ entries for retrieving byte data subjected to data conversion as entry addresses. 4-bit conversion data obtained by half-reducing byte data corresponding to each entry address are respectively stored in the entries of the conversion table 16.

An image memory 17 stores a binary image (having a size of 2,048 × 2,048 pixels (512 k bytes)) obtained by half-reducing the binary image stored in the image memory 11 in the y- and x-axis directions.

An operation of the system will be described below.

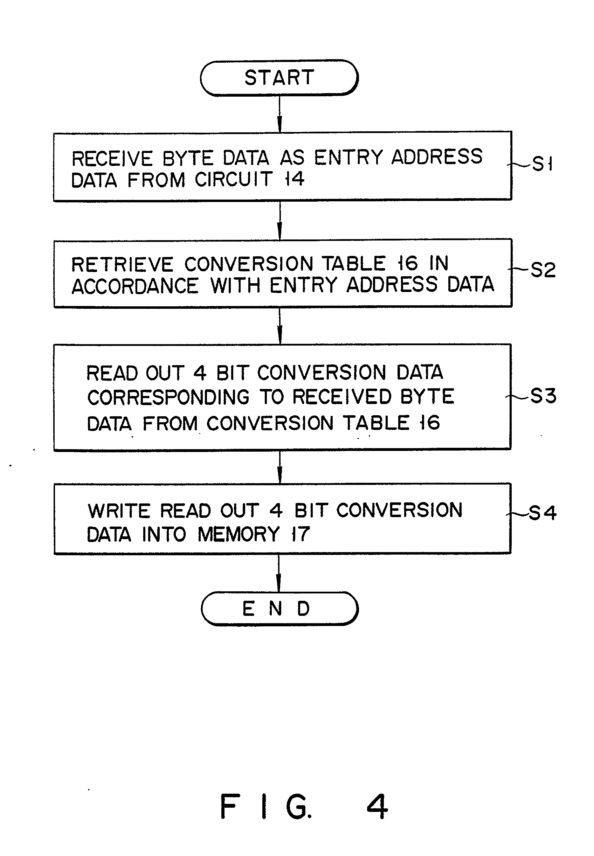

When image data is to be read out from the image memory 11, in which a two-dimensional binary image read by a scanner is stored, while a memory address is incremented, i.e., a raster scan is to be performed, raster addresses are sequentially generated by the address controller 13. With this operation, as shown in Fig. 3, byte data (8-bit data) of a binary image 21 stored in the image memory 11 is sequentially read out from the first line.

The byte data sequentially read out from the image memory 11 are input to the interlace control circuit 14. If byte data read out from the image memory 11 is odd line data, the interlace control circuit 14 outputs the read out byte data to the data conversion circuit 15. If the byte data is even line data, the circuit 14 aborts the read out byte data.

A binary image 22 constructed by the odd line data of the binary image 21 is input to the data conversion circuit 15 in units of bytes. That is, the binary image 21 is half-reduced in the y-axis direction by removing the even line data, and the half-reduced binary image is input to the data conversion circuit 15 in units of bytes.

An operation of the data conversion circuit 15 will be described below in accordance with a flow chart shown in Fig. 4.

In step S1, byte data output from the interlace control circuit 14 is received as entry address data.

In step S2, the conversion table 16 is retrieved in accordance with the received entry address data.

In step S3, 4-bit conversion data corresponding to the received byte data is read out from the conversion table 16.

In step S4, the read out 4-bit conversion data is written in the memory 17.

In this case, 4-bit conversion data to be read out from the conversion table 16 is obtained by half-reducing byte data in the x-axis direction. More specifically, if byte data is respectively represented by A0, A1, A2, A3, A4, A5, A6, and A7; 4-bit conversion data, B0, B1, B2, and B3; and a logic operation (OR), +, a reducing process is represented by the following equations:

$$B0 = A0 + A1 \quad ... \quad (1)$$
$$B1 = A2 + A3 \quad ... (2)$$
$$B2 = A4 + A5 \quad ... (3)$$
$$B3 = A6 + A7 \quad ... (4)$$

As can be seen from the above equations, the 4-bit conversion data B0 to B3 are obtained by ORing the byte data A0 to A7 in units of two bits. By using the conversion data stored in the conversion table 16, even when the even line data of the binary image 21 is aborted by the interlace control circuit 14, substantially the same image information amount as a reduction result obtained by the conventional method of performing a logic operation (OR) in units of 4-bits can be maintained with respect to the black/white distribution of the reduced binary image 21.

For example, the above-described processing is effective for an image read as horizontal lines each having a width corresponding to two pixels or more, such as a general document or a drawing by a scanner having a resolution of about 8 pixels/mm. This is because, for example, the standards of CCITT (International Telegraph and Telephone Consultative Committee) state that two continuous black pixels correspond to the shortest code, and logic operation (OR) in units of two bits is proper from the probablistic point of view.

Every time byte data is converted into 4-bit conversion data by the data conversion circuit 15, the 4-bit data is sequentially transferred to the image memory 17 as half-reduced data with respect to byte data. The transferred 4-bit conversion data is written in a memory area of the image memory 17 which is designated by raster addresses sequentially generated by an address controller (not shown). With this operation, a binary image 23 obtained by half-reducing the image 21 in the y- and x-axis directions is stored in the image memory 17.

As described above, the frequency of access to the image memory 11 is reduced to 1/8 in comparison with the conventional method of accessing image data in unit of one pixel. In addition, since the data processing amount of the data conversion circuit 15 is reduced to 1/2 by the interlace control circuit 14, the processing speed can be increased to about 10 times in comparison with the conventional system.

In this embodiment, only the odd line data are selected. However, only the even line data may be selected.

In addition, in place of the address controller 13, an address controller for generating addresses for a jump scan of either odd lines or even lines may be used. In this case, the interlace control circuit 14 is not necessary.

Moreover, the size of image data read out from the image memory 11 and the size of conversion data processed by the data conversion circuit 15 are not limited to one byte, and both the sizes need not coincide with each other.

The present invention is not limited to the above-described embodiment. Various changes and modifications can be made within the spirit and scope of the invention.

## Claims

1. A method for reducing a binary image having a plurality of lines, the method characterized by the steps of:

storing the binary image;

reading out binary data having a predetermined size from the binary image every predetermined line;

storing conversion data for reducing the binary data; and

converting the read out binary data in accordance with the stored conversion data, thereby obtaining a reduced binary image.

2. The method according to claim 1, characterized in that the conversion data is acquired by a logic operation for the read out binary data.

3. The method according to claim 2, characterized in that the logic operation is performed every 2 pixels included in binary data.

4. A system for reducing a binary image having a plurality of lines, the system characterized by:

first storing means (11) for storing the binary image;

reading out means (13, 14) for reading out binary data having a predetermined size from the binary image every predetermined line;

second storing means (16) for storing conversion data for reducing the binary data; and

converting means (15) for converting the read out binary data in accordance with the stored conversion data, thereby obtaining a reduced binary image.

5. The system according to claim 4, characterized in that the conversion data is acquired by logic operation for the read out binary data.

6. The system according to claim 5, characterized in that the logic operation is performed every 2 pixels included in the binary data.

F I G. 1

F I G. 3

EP 0 367 175 A2

F I G.  2

START

RECEIVE BYTE DATA AS ENTRY ADDRESS
DATA FROM CIRCUIT 14 —S1

RETRIEVE CONVERSION TABLE 16 IN
ACCORDANCE WITH ENTRY ADDRESS DATA —S2

READ OUT 4 BIT CONVERSION DATA
CORRESPONDING TO RECEIVED BYTE
DATA FROM CONVERSION TABLE 16 —S3

WRITE READ OUT 4 BIT CONVERSION
DATA INTO MEMORY 17 —S4

E N D

F I G.  4